# EUROPÄISCHE PATENTSCHRIFT

(11) **EP 2 748 563 B1**
(45) Veröffentlichungstag und Bekanntmachung des Hinweises auf die Patenterteilung: **21.06.2017**
(21) Anmeldenummer: 12745656.4
(22) Anmeldetag: 23.07.2012
(51) Int. Cl.: G01D 11/24, B29C 65/16, B29L 31/34, B29C 65/14, B29C 65/00, B32B 37/04, B32B 38/00, G01B 21/16

(54) **GEHÄUSE FÜR EINEN SENSOR FÜR EIN FAHRZEUGGETRIEBE**
SENSOR HOUSING FOR A VEHICLE TRANSMISSION
BOÎTIER D'UN DÉTECTEUR DESTINÉ À UNE BOÎTE DE VITESSES DE VÉHICULE

(30) Priorität: 26.08.2011 DE 102011081638
(43) Veröffentlichungstag der Anmeldung: 02.07.2014
(73) Patentinhaber: ZF Friedrichshafen AG, 88046 Friedrichshafen (DE)
(72) Erfinder: RASCHKE, Dirk, 91275 Auerbach (DE)
(86) Internationale Anmeldenummer: PCT/EP2012/064400
(87) Internationale Veröffentlichungsnummer: WO 2013/029873

(56) Entgegenhaltungen:
- DE-A1-102007 021 268
- DE-A1-102010 001 493
- DE-B3-102005 026 205
- US-A1- 2005 217 627

## Beschreibung

Die vorliegende Erfindung bezieht sich auf ein Gehäuseteil für ein Gehäuse eines Sensors, auf ein Gehäuse für einen Sensor für ein Fahrzeuggetriebe, auf einen Sensor für ein Fahrzeuggetriebe und auf ein Verfahren zum Herstellen eines Sensors für ein Fahrzeuggetriebe.

Ein Gehäuse eines Sensors, insbesondere eines Positionssensors für ein Fahrzeuggetriebe besteht meist aus zwei Bauteilen bzw. Gehäuseteilen, welche dicht miteinander verbunden werden, um einen abgedichteten Raum für zumindest ein Element des Sensors zu schaffen.

Die DE 10 2009 002 005 A1 offenbart einen Positionssensor zur Erfassung einer Position eines Elements, insbesondere eines Getriebeelements.

Die US 2005/0217627 A1 zeigt einen Ansaugstutzen mit einem äußeren Gehäuse und einem in dem äußeren Gehäuse angeordneten inneren Gehäuse. Die beiden Gehäuse sind mittels eines Durchstrahlschweißverfahrens in einem Fügebereich stoffschlüssig miteinander verbunden. Dabei weist das äußere Gehäuse im Fügebereich eine geringere Wandstärke als außerhalb des Fügebereichs auf, sodass eine von dem äußeren Gehäuse im Fügebereich durchgelassene Strahlung ausreichend stark ist, um die beiden Gehäuse zuverlässig miteinander zu verschweißen.

Die DE 10 2007 021 268 A1 zeigt eine zeigt eine Verstelleinheit für ein Kraftfahrzeug. Die Verstelleinheit umfasst zwei Gehäuseteile, die mittels Laserschweißen zu einem Gehäuse verbunden sind. Dabei ist ein einer Laserquelle zugewandtes Gehäuseteil aus einem eine Laserstrahlung transmittierenden Material und ein von der Laserquelle abgewandtes Gehäuseteil aus einem die Laserstrahlung absorbierenden Material gefertigt. In dem Gehäuse kann ein Sensor angeordnet sein.

Die DE 10 2005 026 205 B3 zeigt ein Gehäuse, in dem ein Rahmenelement mit einem an einem Deckel des Gehäuses anliegenden Biegearm angeordnet ist. Der Deckel ist mit einem Grundteil des Gehäuses mittels Laserschweißen stoffschlüssig verbunden. Ebenso ist der Biegearm mittels Laserschweißen mit dem Deckel stoffschlüssig verbunden.

Die DE 10 2010 001 493 A1 zeigt ein Verfahren zum Herstellen eines Gehäuses für ein elektronisches Bauelement. Dabei werden zwei Gehäuseteile mittels Laserschweißen derart miteinander verbunden, dass das Bauelement zwischen den Gehäuseteilen in einer Fügerichtung eingeklemmt wird.

Vor diesem Hintergrund schafft die vorliegende Erfindung ein verbessertes Gehäuseteil für ein Gehäuse eines Sensors, ein verbessertes Gehäuse für einen Sensor für ein Fahrzeuggetriebe, einen verbesserten Sensor für ein Fahrzeuggetriebe sowie ein verbessertes Verfahren zum Herstellen eines Sensors für ein Fahrzeuggetriebe, gemäß den Hauptansprüchen. Vorteilhafte Ausgestaltungen ergeben sich aus den Unteransprüchen und der nachfolgenden Beschreibung.

Die vorliegende Erfindung beruht auf der Erkenntnis, dass ein Gehäuseteil für ein Gehäuse eines Sensors für ein Fahrzeuggetriebe in einem einen Fügebereich umfassenden Abschnitt des Gehäuseteils, entlang dem das Gehäuseteil mit einem weiteren Gehäuseteil mittels eines Fügeverfahrens, insbesondere eines Durchstrahlschweißverfahrens zu dem Gehäuse verbindbar ist, derart ausbildbar ist, dass eine bei dem Fügeverfahren erzeugte konstante bzw. gleichbleibende Strahlung entlang des Abschnitts mit konstanter bzw. gleichbleibender Strahlungsintensität abgebbar ist. Mit anderen Worten ist das Gehäuseteil derart ausbildbar, dass eine bei dem Fügeverfahren eingesetzte und das Gehäuseteil durchdringende konstante bzw. gleichbleibende Strahlung zur Verbindung des Gehäuseteils mit dem weiteren Gehäuseteil zu dem Gehäuse, mit konstanter bzw. gleichbleibender Strahlungsintensität auf der Fügebereichsseite des Gehäuseteils, auf welcher das weitere Gehäuseteil mit dem Gehäuseteil zu dem Gehäuse verbindbar ist, austretbar bzw. aussendbar ist. Dies kann vorzugsweise durch Beeinflussung der optischen Materialeigenschaften wie Transmission, Absorption und Reflexion des für den den Fügebereich umfassenden Abschnitts verwendeten Materials und/oder vorzugsweise durch Ausbilden des den Fügebereich umfassenden Abschnitts mit einer konstanten bzw. gleichbleibenden Wandstärke bzw. Materialstärke erfolgen.

Mittels der Beeinflussung der optischen Eigenschaften kann gemäß einer bevorzugten Ausführungsform der vorliegenden Erfindung ein Gehäuseteil bereitgestellt werden, das einen Fügebereich aufweist, das wenigstens zwei Bereiche mit zueinander unterschiedlicher Wandstärke umfasst, wobei eine Verbindung mit einem weiteren Gehäuseteil zu einem Gehäuse zuverlässig ausführbar ist, ohne dass Wandstärkeneinflüsse die Fügeverbindung negativ beeinflussen könnten. So können Gehäuseteile mit unterschiedlicher Oberflächenkontur und Dicke in dem den Fügebereich umfassenden Abschnitt für ein Gehäuse bereitgestellt werden. Denn durch geeignete Materialauswahl unter Berücksichtigung wenigstens der Transmissions-, Reflexions- oder Absorptionseigenschaft des Materials für den die beiden Bereiche mit unterschiedlicher Wandstärke umfassenden Abschnitt kann eine Abgabe einer konstanten bzw. gleichbleibenden Strahlungsintensität entlang des die wenigstens zwei Bereiche umfassenden Abschnitts auf der Fügebereichsseite des Gehäuseteils realisiert werden. Beispielsweise kann für einen ersten Fügebereich mit einer Wandstärke bzw. Materialstärke ein Material verwendet werden, dass eine unter Anpassung der Absorptions- und/oder Reflexionseigenschaft geringere Transmissionseigenschaft aufweist, als das Material, das für einen zweiten Fügebereich mit einer mit Blick auf die Wandstärke des ersten Fügebereichs größeren Wandstärke bzw. Materialstärke verwendet wird. Da die Summe aus Transmission, Absorption und Reflexion eines mit Strahlung beaufschlagbaren Materials grundsätzlich 100% ergibt, kann für jeden, vorzugsweise eine andere Wandstärke aufweisenden Fügebereich ein in Abhängigkeit der gewünschten Strahlungsintensität geeignetes Material mittels Anpassung der optischen Eigenschaften desselbigen festgelegt werden, um entlang des den Fügebereich umfassenden Abschnitts eine konstante bzw. gleichbleibende abgebbare bzw. austretbare bzw. aussendbare Strahlungsintensität zu erreichen. Als geeignete Materialien kommen beispielsweise dem Fachmann für Fügeverfahren wie vorzugsweise das Durchstrahlschweißverfahren hinlänglich bekannte Kunststoffe wie Thermoplaste oder thermoplastische Elastomere in Frage. Bei diesen Materialien können die Transmissions-, Absorptions- und/oder Reflexionseigenschaften bekanntermaßen durch Beimengung von Zusätzen und/oder Verstärkungsstoffen angepasst und entsprechend festgelegt werden.

Mit der vorgenannten zweiten bevorzugten Ausführungsform kann ein Gehäuseteil bereitgestellt werden, das wenigstens in dem den Fügebereich umfassenden Abschnitt mit einer konstanten bzw. gleichbleibenden Wandstärke bzw. Materialstärke ausgeführt werden kann. In dem Fügebereich ist somit eine Dicke des Gehäuseteils konstant, was beispielsweise vorteilhafte Auswirkungen auf den Fügevorgang hat und wodurch das Gehäuseteil einfach und kostengünstig herstellbar ist. Allgemein gesagt ist beispielsweise in dem Fügebereich des Gehäuseteils zumindest eine Abmessung und zusätzlich oder alternativ eine Transmissionseigenschaft des Gehäuseteils konstant. Konstant kann so verstanden werden, dass beispielsweise aufgrund von Materialtoleranzen und/oder Herstellungstoleranzen der das Gehäuse ausformenden Gehäuseteile sowie Leistungstoleranzen der bei dem Fügeverfahren verwendeten Fügevorrichtung zur Verbindung der Gehäuseteile zu dem Gehäuse geringe Abweichungen entlang des Fügebereichs bzw. der Fügeverbindung bestehen können.

Aufgrund der vorgenannten Maßnahmen können in dem Fügebereich der Fügevorgang bzw. das Fügeverfahren zum Verbinden des Gehäuseteils mit einem weiteren Gehäuseteil auf gleichmäßige, zuverlässige und dichte Weise ausgeführt werden. Insbesondere können durch Materialunregelmäßigkeiten, Wandstärkeschwankungen und dergleichen bedingte Güteabweichungen einer bei dem Fügevorgang erreichbaren Verbindung vermieden werden. Eine Güte, Dichtigkeit, Gleichmäßigkeit und Robustheit der Fügeverbindung kann durch eine Ausgestaltung des Gehäuseteils gemäß Ausführungsformen der vorliegenden Erfindung erhöht werden.

In einer bevorzugten Ausführungsform des Gehäuseteils bildet das Gehäuseteil ein Element eines Sensorgehäuses, weiter bevorzugt für ein Fahrzeuggetriebe aus.

Bei dem Fahrzeug kann es sich um ein Kraftfahrzeug, wie beispielsweise einen Personenkraftwagen, Lastkraftwagen oder ein sonstiges Nutzfahrzeug, mit einem Schaltgetriebe handeln. Bei dem Getriebe kann es sich um ein Direktschaltgetriebe oder ein automatisch geschaltetes Getriebe handeln. Bei dem Sensor kann es sich um einen Positionssensor, Wegsensor oder dergleichen handeln. Der Sensor kann dabei als ein Magnetfeldsensor ausgebildet sein. Zumindest ein Sensorelement des Sensors ist im fertig montierten Zustand des Sensors innerhalb des Gehäuses angeordnet. Das Gehäuse ist hierbei zum Beispiel zweiteilig ausgebildet. Insbesondere ist das Gehäuse aus einem Gehäuseteil und einem weiteren Gehäuseteil gebildet. Das Gehäuseteil und das weitere Gehäuseteil können miteinander verbunden werden, um das Gehäuse zu bilden. Bei dem Gehäuseteil kann es sich um eine Gehäusehälfte, eine Gehäuseschale oder Gehäusehalbschale, eine Gehäuseplatte oder dergleichen handeln. Das Gehäuseteil ist ausgebildet, um mittels eines Fügeverfahrens, vorzugsweise mittels eines Durchstrahlschweißverfahrens mit dem weiteren Gehäuseteil verbunden zu werden. Mittels des Fügeverfahrens kann beispielsweise eine stoffschlüssige Verbindung zwischen dem Gehäuseteil und dem weiteren Gehäuseteil hergestellt werden. Insbesondere kann mittels des Fügeverfahrens eine Verbindung zwischen dem weiteren Gehäuseteil und dem Gehäuseteil in dem Fügebereich bzw. entlang des Fügebereichs des Gehäuseteils hergestellt werden. Somit kann mittels des Fügeverfahrens eine Verbindung zwischen einer Fügeoberfläche des Gehäuseteils in dem Fügebereich und einer weiteren Fügeoberfläche des weiteren Gehäuseteils hergestellt werden. Der Fügebereich des Gehäuseteils weist beispielsweise einen Abschnitt einer Wand des Gehäuseteils auf. Somit kann sich der Fügebereich von der Fügeoberfläche des Gehäuseteils durch eine von der Fügeoberfläche begrenzte Wand bis zu einer von der Fügeoberfläche abgewandten, die Wand begrenzenden Oberfläche erstrecken. Der Fügebereich kann somit eine Dicke aufweisen, die einer Dicke oder Stärke der Wand entspricht. Eine Form des Fügebereichs kann dabei eine ausgefüllte oder nicht ausgefüllte Grundfläche mit einem Umriss aufweisen, der einer Form der weiteren Fügeoberfläche des weiteren Gehäuseteils entspricht. Beispielsweise kann die Form des Fügebereichs somit kreisförmig, rechteckig oder ringförmig sein. Mittels der vorgenannten Maßnahmen, also der Anpassung der optischen Eigenschaft oder alternativ oder zusätzlich der konstanten Wandstärke kann gewährleistet werden, dass das Gehäuse entlang des Fügebereichs von einem gleichbleibenden Anteil der auf das Gehäuseteil auftreffenden Strahlung durchdrungen wird. Der das Gehäuseteil durchdringende gleichbleibende Anteil der Strahlung steht für den Fügevorgang zur Verfügung. Das Gehäuse kann somit entlang des Fügebereichs eine gleichbleibende Durchlässigkeit für die Strahlung aufweisen. Anders ausgedrückt kann durch den konstanten Transmissionsgrad gewährleistet werden, dass entlang des Fügebereichs ein gleichbleibender Anteil der auf das Gehäuse auftreffenden Strahlung reflektiert und/oder absorbiert wird und somit nicht für den Fügevorgang zur Verfügung steht. Die Gehäuseteile können aus Kunststoff sein und beispielsweise als Kunststoffspritzteile ausgeführt sein.

Hierbei kann das Gehäuseteil transmittierend für die bei dem Fügeverfahren eingesetzte Strahlung ausgebildet sein. So kann das Fügeverfahren beispielsweise ein laserbasiertes Verfahren, insbesondere ein Laserschweißverfahren aufweisen. Die eingesetzte Strahlung kann somit beispielsweise elektromagnetische Strahlung, insbesondere Laserstrahlung bzw. Laserlicht sein. Das Gehäuseteil ist ausgebildet, um die Strahlung durchzulassen bzw. zu transmittieren. Anders ausgedrückt ist das Gehäuseteil ausgebildet, die Strahlung nicht bzw. zu einem vernachlässigbaren oder zu einem vorbestimmten Anteil zu absorbieren. Ein solches transmittierend ausgebildetes Gehäuseteil bietet den Vorteil, dass dieses auf einfache und robuste Weise mit dem weiteren Gehäuseteil verbunden werden kann. Das Fügeverfahren kann dabei durch das Gehäuseteil hindurch ausgeführt werden, wobei das Gehäuseteil und das weitere Gehäuseteil bereits aneinander angeordnet sein können. Somit können eine komplizierte Verbindungsgeometrie sowie eine großflächige Verbindung mit gleichmäßiger Güte realisiert werden.

So kann das Gehäuseteil entlang des gesamten Fügebereichs eine konstante Wandstärke aufweisen. Somit kann ein Material, aus dem das Gehäuseteil gebildet ist, entlang des Fügebereichs eine gleichbleibende Dicke oder Stärke aufweisen. Eine solche Ausführungsform bietet den Vorteil, dass auf eine einfache Weise eine Abgabe einer konstanten Strahlungsintensität entlang des Fügebereichs realisiert werden kann. Dadurch kann eine gleichmäßig hohe Verbindungsgüte bei dem Fügeverfahren erreicht werden. Erfindungsgemäß ist an einer planaren Oberfläche des Gehäuseteils zumindest ein Führungsabschnitt und eine Führungsrippe zum Führen eines beweglichen Sensorelementes angeordnet. Dabei weisen der zumindest eine Führungsabschnitt und die Führungsrippe eine gemeinsame Haupterstreckungsrichtung auf. Hierbei erstreckt sich die Führungsrippe über einen Abschnitt des Fügebereichs hinweg und ist in dem Abschnitt unterbrochen. Insbesondere können an einer planaren Oberfläche des Gehäuseteils zwei gegenüberliegende Führungsabschnitte und eine zwischen den Führungsabschnitten angeordnete Führungsrippe zum Führen eines beweglichen Sensorelementes angeordnet sein, wobei die Führungsabschnitte und die Führungsrippe eine gemeinsame Haupterstreckungsrichtung aufweisen. Hierbei kann das Gehäuseteil einen plattenförmigen Abschnitt aufweisen, in dem die planare Oberfläche angeordnet ist. In einem Randbereich der planaren Oberfläche ist der zumindest eine Führungsabschnitt angeordnet. Insbesondere kann ein erster Führungsabschnitt in einem ersten Randbereich der planaren Oberfläche angeordnet sein und kann ein zweiter Führungsabschnitt in einem dem ersten Randbereich gegenüberliegenden, zweiten Randbereich der planaren Oberfläche angeordnet sein. Bei dem zumindest einen Führungsabschnitt kann es sich um eine Führungsnut, Führungsschiene oder dergleichen handeln. Ferner kann eine Führungsrippe, die beispielsweise als eine längliche Wölbung der ansonsten planaren Oberfläche ausgebildet sein kann, sich über die planare Oberfläche erstrecken. Dabei kann die Führungsrippe eine Haupterstreckungsrichtung aufweisen, die einer Haupterstreckungsrichtung des zumindest einen Führungsabschnitts entspricht. Somit können sich der zumindest eine Führungsabschnitt und die Führungsrippe im Wesentlichen parallel an der planaren Oberfläche erstrecken. Der zumindest eine Führungsabschnitt und die Führungsrippe sind dabei ausgebildet, um ein bewegliches Sensorelement oder einen Schlitten oder dergleichen, der das bewegliche Sensorelement trägt, entlang eines Bewegungsweges zu führen bzw. beweglich aufzunehmen, wobei der Bewegungsweg durch eine Länge des zumindest einen Führungsabschnitts und/oder der Führungsrippe definiert sein kann. Insbesondere können der zumindest eine Führungsabschnitt und die Führungsrippe ausgebildet sein, um einen Magnetschlitten zu führen. Dabei kann sich die Führungsrippe über zumindest einen Abschnitt des Fügebereichs hinweg erstrecken, beispielsweise zumindest einen Abschnitt des Fügebereichs berühren, überqueren, kreuzen oder dergleichen. In dem Abschnitt des Fügebereichs, der von der Führungsrippe beispielsweise berührt, überquert oder gekreuzt wird, ist die Führungsrippe unterbrochen. Somit weist die planaren Oberfläche in dem Abschnitt des Fügebereichs beispielsweise keine Wölbung zum Ausbilden der Führungsrippe auf. Die Führungsrippe weist in dem Abschnitt des Fügebereichs eine Ausnehmung auf, wobei die Führungsrippe in dem Abschnitt bis auf ein Niveau der planaren Oberfläche abgesenkt sein kann. Somit kann die Führungsrippe bei jeder Kreuzung der Führungsrippe mit dem Fügebereich eine Unterbrechung aufweisen. Eine solche Ausführungsform bietet den Vorteil, dass sowohl eine gleichmäßig zuverlässige und robuste Verbindung mit dem weiteren Gehäuseteil als auch eine präzise und sichere Führung eines beweglichen Sensorelements ermöglicht werden.

Die vorliegende Erfindung schafft ferner ein Gehäuse für einen Sensor für ein Fahrzeuggetriebe, dadurch gekennzeichnet, dass das Gehäuse ein oben genanntes Gehäuseteil und ein weiteres Gehäuseteil aufweist, das weitere Gehäuseteil an dem Fügebereich des Gehäuseteils an dem Gehäuseteil anliegend angeordnet ist, und das Gehäuseteil und das weitere Gehäuseteil einen Aufnahmeraum für ein stationäres Sensorelement umschließen.

Bei dem Aufnahmeraum kann es sich um einen Hohlraum in dem Gehäuse handeln, der gebildet wird, wenn das weitere Gehäuseteil an dem Fügebereich des Gehäuseteils an dem Gehäuseteil anliegend angeordnet ist. Der Aufnahmeraum kann durch eine Ausbuchtung oder dergleichen des weiteren Gehäuseteils und zusätzlich oder alternativ des Gehäuseteils gebildet sein. Beispielsweise kann der Aufnahmeraum durch das Gehäuseteil deckelartig verschließbar sein. Bei dem stationären Sensorelement kann es sich um ein ortsfestes Sensorelement, beispielsweise einen Stator oder dergleichen des Sensors handeln. Das stationäre Sensorelement kann hierbei ausgebildet sein, um eine Erfassung einer Position oder eines Weges des beweglichen Sensorelements zu ermöglichen. In Verbindung mit dem Gehäuse kann ein oben genanntes Gehäuseteil vorteilhaft eingesetzt oder verwendet werden, um eine dichte, gleichmäßige, und robuste Verbindung des Gehäuseteils und des weiteren Gehäuseteils zu dem Gehäuse zu ermöglichen.

Hierbei kann das Gehäuseteil entlang dem Fügebereich mit dem weiteren Gehäuseteil mittels eines Fügeverfahrens verbunden sein. Auch kann das weitere Gehäuseteil absorbierend für die bei dem Fügeverfahren eingesetzte Strahlung ausgebildet sein. Bei dem Fügeverfahren kann es sich beispielsweise um einen Laserschweißverfahren oder dergleichen handeln. Das weitere Gehäuseteil kann ausgebildet sein, um die eingesetzte Strahlung, d. h. beispielsweise das Laserlicht, nicht zu transmittieren. Eine solche Ausführungsform bietet den Vorteil, dass das Gehäuseteil und das weitere Gehäuseteil auf einfache, effiziente und zuverlässige Weise zu dem Gehäuse verbunden werden können.

Die vorliegende Erfindung schafft ferner einen Sensor für ein Fahrzeuggetriebe, wobei der Sensor ein stationäres Sensorelement und ein bewegliches Sensorelement aufweist, dadurch gekennzeichnet, dass der Sensor ein oben genanntes Gehäuse aufweist, das stationäre Sensorelement in dem von dem Gehäuseteil und dem weiteren Gehäuseteil umschlossenen Aufnahmeraum angeordnet ist, und das bewegliche Sensorelement an dem Gehäuseteil beweglich angebracht ist.

In Verbindung mit dem Sensor kann ein oben genanntes Gehäuse vorteilhaft eingesetzt bzw. verwendet werden, um ein Element des Sensors in dem dicht verschlossenen Aufnahmeraum zu schützen und ein weiteres Element des Sensors beweglich und positionsmäßig exakt definiert anzuordnen.

Gemäß einer Ausführungsform, wobei der Sensor eine Auswerteelektronik aufweist, kann die Auswerteelektronik in dem von dem Gehäuseteil und dem weiteren Gehäuseteil umschlossenen Aufnahmeraum angeordnet sein. Auch kann das weitere Gehäuseteil eine elektrische Kontakteinrichtung zur Ankontaktierung des stationären Sensorelements und zusätzlich oder alternativ der Auswerteelektronik von außerhalb des weiteren Gehäuseteils aufweisen. Dabei kann die Auswerteelektronik mit der elektrischen Kontakteinrichtung und gegebenenfalls auch mit dem stationären Sensorelement elektrisch verbunden sein. Das stationäre Sensorelement kann auch unabhängig von der Auswerteelektronik mit der elektrischen Kontakteinrichtung elektrisch verbunden sein. Die elektrische Kontakteinrichtung ist ausgebildet, um eine Versorgung der Auswerteelektronik und/oder des stationären Sensorelements mit elektrischem Strom von außerhalb des Sensors bzw. des Gehäuses sowie eine Übertragung von Sensorinformationen nach außerhalb des Sensors bzw. des Gehäuses zu ermöglichen. Eine solche Ausführungsform bietet den Vorteil, dass die Auswerteelektronik des Sensors in dem Gehäuse sicher und geschützt angeordnet sowie elektrisch kontaktiert werden kann.

Die vorliegende Erfindung schafft ferner ein Verfahren zum Herstellen eines Sensors für ein Fahrzeuggetriebe gemäß Anspruch 9. In Verbindung mit dem Verfahren kann ein oben genannter Sensor vorteilhaft hergestellt werden. Mittels des Verfahrens können vorzugsweise oben beschriebene Gehäuseteile mit einer gleichmäßigen, zuverlässigen und robusten Verbindung verbunden werden, um einen dicht abgeschlossenen Aufnahmeraum zu schaffen, in dem das stationäre Sensorelement und/oder die Auswerteelektronik geschützt angeordnet werden können.

Insbesondere kann der Schritt des Zusammenfügens mittels Laserschweißen ausgeführt werden. Dabei kann ein bei dem Laserschweißen eingesetzter Laserstrahl von dem Gehäuseteil transmittiert und von dem weiteren Gehäuseteil absorbiert werden. Somit kann eine stoffschlüssige Verbindung zwischen dem Gehäuseteil und dem weiteren Gehäuseteil effizient, gleichmäßig, zuverlässig und robust hergestellt werden.

Die Erfindung wird anhand der beigefügten Zeichnungen beispielhaft näher erläutert. Es zeigen:
- Fig. 1: ein Gehäuse eines Sensors für ein Fahrzeuggetriebe;
- Fig. 2: eine schematische Darstellung eines Fahrzeugs mit einem Sensor für ein Fahrzeuggetriebe, gemäß einem Ausführungsbeispiel der vorliegenden Erfindung;
- Fig. 3: ein Gehäuse eines Sensors für ein Fahrzeuggetriebe, gemäß einem Ausführungsbeispiel der vorliegenden Erfindung, in einem nicht zusammengefügten Zustand;
- Fig. 4: ein Gehäuse eines Sensors für ein Fahrzeuggetriebe, gemäß einem Ausführungsbeispiel der vorliegenden Erfindung, in einem zusammengefügten Zustand;
- Fig. 5: eine Draufsicht auf ein Gehäuse eines Sensors für ein Fahrzeuggetriebe gemäß einem Ausführungsbeispiel der vorliegenden Erfindung; und
- Fig. 6: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

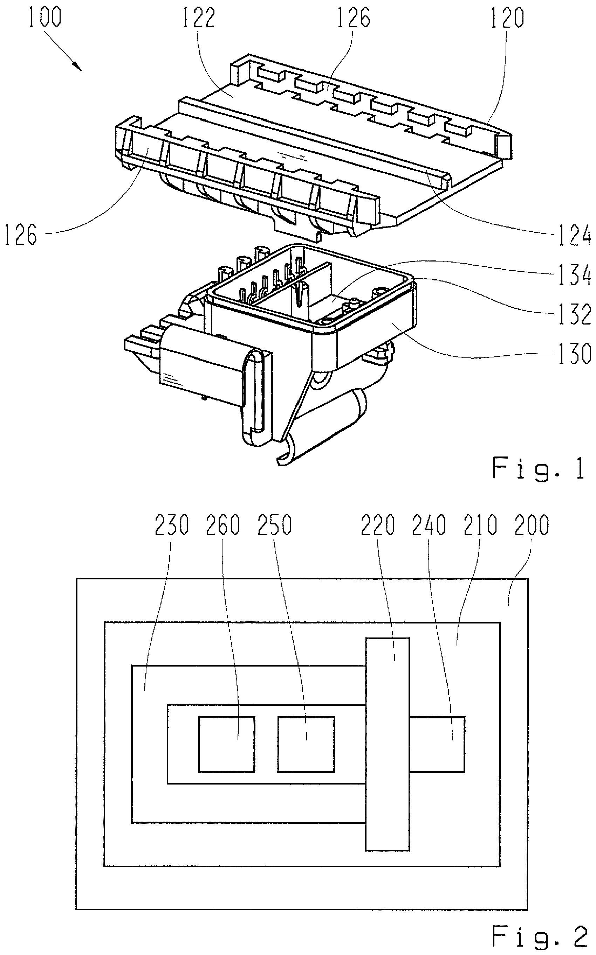

Fig. 1 zeigt Teile eines Gehäuses 100 eines Sensors für ein Fahrzeuggetriebe. Das Gehäuse 100 weist ein Gehäuseteil 120, das eine planare Oberflächenseite 122 mit einer durchgehenden Führungsrippe 124 und zwei gegenüberliegenden Führungsabschnitten 126 zum Führen eines beweglichen Sensorelements umfasst, sowie ein weiteres Gehäuseteil 130 auf, das eine Fügeoberfläche 132 und eine Aufnahmebucht 134 zum Aufnehmen eines stationären Sensorelements umfasst. Das Gehäuseteil 120 und das weitere Gehäuseteil 130 können zusammengefügt werden, um das Gehäuse 100 fertigzustellen. Dabei kommt die Fügeoberfläche 132 des weiteren Gehäuseteils 130 in Anlage gegen eine entsprechende Fügeoberfläche (nicht gezeigt) des Gehäuseteils 120 und die Aufnahmebucht 134 wird durch das Gehäuseteil 120 zu einem Aufnahmeraum verschlossen.

Fig. 2 zeigt eine schematische Darstellung eines Fahrzeugs 200 mit einem Sensor 210 für ein Fahrzeuggetriebe, gemäß einem Ausführungsbeispiel der vorliegenden Erfindung. Der Sensor 210 ist durch ein Gehäuse und Sensorelemente gebildet. Das Gehäuse des Sensors 210 weist ein Gehäuseteil 220 und ein weiteres Gehäuseteil 230 auf. Die Sensorelemente des Sensors 210 weisen ein bewegliches Sensorelement 240, ein stationäres Sensorelement 250 und eine Auswerteelektronik 260 auf. Das Gehäuseteil 220 und das weitere Gehäuseteil 230 sind zusammengefügt, wobei dieselben einen Aufnahmeraum umschließen, in dem das stationäre Sensorelement 250 und die Auswerteelektronik 260 des Sensors 210 angeordnet sind.

Das Gehäuseteil 220 weist in einem Fügebereich, in dem das Gehäuseteil 220 mit dem weiteren Gehäuseteil 230 zusammengefügt ist, eine konstante Wandstärke bzw. Materialstärke auf. Das Gehäuseteil 220 und das weitere Gehäuseteil 230 können beispielsweise mittels Laserschweißen zusammengefügt sein. Dabei kann das Gehäuseteil 220 ausgebildet sein, um für bei dem Laserschweißen verwendetes Laserlicht transmittierend zu sein. Das weitere Gehäuseteil 230 kann ausgebildet sein, um für bei dem Laserschweißen verwendetes Laserlicht absorbierend zu sein.

Das bewegliche Sensorelement 240 ist an einer von dem Aufnahmeraum abgewandten Oberfläche des Gehäuseteils 220 angeordnet. Das bewegliche Sensorelement 240 kann dabei so an dem Gehäuseteil 220 angebracht sein, dass eine Bewegung des beweglichen Sensorelements 240 entlang eines Bewegungsweges an der von dem Aufnahmeraum abgewandten Oberfläche des Gehäuseteils 220 ermöglicht ist. Bei dem beweglichen Sensorelement 240 kann es sich beispielsweise um einen beweglich an dem Gehäuseteil 220 angebrachten Magnetschlitten handeln. Bei dem stationären Sensorelement 250 kann es sich beispielsweise um einen Stator handeln, der ausgebildet ist, um eine Erfassung einer Position des beweglichen Sensorelementes 240 bzw. des Magnetschlittens zu ermöglichen. Das bewegliche Sensorelement 240 kann ferner mit einem Getriebeelement, insbesondere einem sich bewegenden Getriebeelement, des Fahrzeugs 200 verbunden sein.

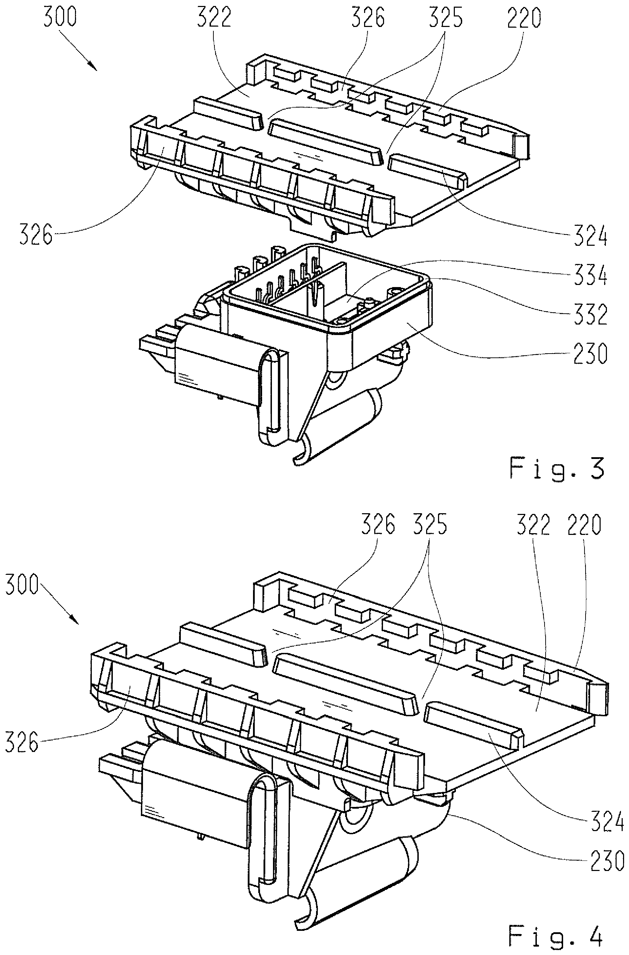

Fig. 3 zeigt ein Gehäuse eines Sensors für ein Fahrzeuggetriebe, gemäß einem Ausführungsbeispiel der vorliegenden Erfindung, in einem nicht zusammengefügten Zustand. Ein Gehäuseteil 220 und ein weiteres Gehäuseteil 230 bilden das Gehäuse 300. Bei dem Gehäuseteil 220 und dem weiteren Gehäuseteil 230 kann es sich um das Gehäuseteil und das weitere Gehäuseteil aus Fig. 2 handeln. Somit kann das Gehäuseteil 220 ein erstes Bauteil des Gehäuses 300 darstellen und kann das weitere Gehäuseteil 230 ein zweites Bauteil des Gehäuses 300 darstellen. Das Gehäuseteil 220 weist eine planare Oberflächenseite 322 mit einer Führungsrippe 324, zwei Unterbrechungen 325 der Führungsrippe 324 und zwei einander gegenüberliegenden Führungsabschnitten 326 auf. Das weitere Gehäuseteil 230 weist eine Fügeoberfläche 332 und eine Aufnahmebucht 334 auf.

Das Gehäuseteil 220 ist in Fig. 3 oberhalb des weiteren Gehäuseteils 230 angeordnet. Das Gehäuseteil 220 weist einen plattenförmigen Hauptkörper auf. Das Gehäuseteil 220 weist an einer Hauptoberfläche des plattenförmigen Hauptkörpers die Oberflächenseite 322 auf. Die Oberflächenseite 322 ist planar bzw. plan oder eben ausgebildet. Die Oberflächenseite 322 bzw. der plattenförmige Hauptkörper des Gehäuseteils 220 weist beispielhaft einen im Wesentlichen rechteckigen Grundriss auf.

Die Führungsrippe 324 erstreckt sich an der Oberflächenseite 322 geradlinig von einem Ende des plattenförmigen Hauptkörpers bzw. der Oberflächenseite 322 zu einem gegenüberliegenden Ende des plattenförmigen Hauptkörpers bzw. der Oberflächenseite 322. Insbesondere erstreckt sich die Führungsrippe 324 an der Oberflächenseite 322 geradlinig von einer Schmalseitenkante des plattenförmigen Hauptkörpers zu einer gegenüberliegenden Schmalseitenkante des plattenförmigen Hauptkörpers. Die Führungsrippe 324 ist als ein länglicher Vorsprung bzw. eine längliche Erhebung bezüglich der Oberflächenseite 322 ausgebildet. Gemäß dem in Fig. 3 dargestellten Ausführungsbeispiel der vorliegenden Erfindung weist die Führungsrippe 324 drei Abschnitte auf. Anders ausgedrückt weist die Führungsrippe 324 die zwei Unterbrechungen 325 bzw. Unterbrechungsstellen auf. In einem Bereich der Unterbrechungen 325 beträgt bezüglich der Oberflächenseite 322 eine Höhe der Führungsrippe 324 null.

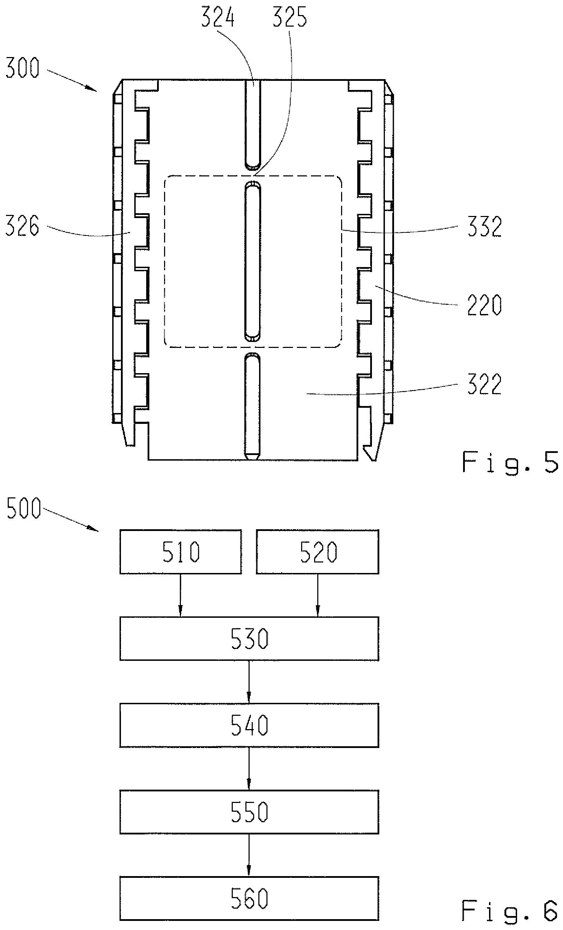

Die Unterbrechungen 325 sind in einem in Fig. 3 nicht explizit gezeigten Fügebereich des Gehäuseteils 220 angeordnet. Der Fügebereich entspricht einem sich von einer von der Oberflächenseite 322 abgewandten Fügeoberfläche des Hauptkörpers des Gehäuseteils 220 durch den Hauptkörper hindurch bis zu der Oberflächenseite 322 erstreckenden Abschnitt des Gehäuseteils 220. Der Fügebereich erstreckt sich somit über eine gesamte Dicke bzw. Wandstärke des Hauptkörpers des Gehäuseteils 220. Der Verlauf sowie die Form bzw. Kontur des Fügebereichs entsprechen dem Verlauf sowie der Form bzw. Kontur der Fügeoberfläche 332 des weiteren Gehäuseteils 230, wie in Fig. 5 schematisch dargestellt. Somit verläuft der Fügebereich hierbei durch die zwei Unterbrechungen 325 in der Führungsrippe 324. Eine der Oberflächenseite 332 abgewandte Oberfläche des Fügebereichs ist gemäß diesem Ausführungsbeispiel durchgängig eben. Wenn die Oberflächenseite 332 alternativ eine unebene Kontur aufweist, kann die der Oberflächenseite 332 abgewandte Oberfläche des Fügebereichs ebenfalls die unebene Kontur der Oberflächenseite 332 aufweisen, damit der Fügebereich entlang seines gesamten Verlaufs eine im Rahmen üblicher Toleranzen gleichbleibende Dicke aufweist. Alternativ kann im Vorwege das Material für das Gehäuseteil bzw. das die jeweiligen Fügebereiche mit unterschiedlicher Wandstärke bzw. Dicke ausformende Material mittels der Anpassung der optischen Eigenschaften derart festgelegt werden, dass die der Oberflächenseite 332 abgewandte Oberfläche des gesamten Fügebereichs eine bei dem Fügeverfahren eingesetzte Strahlung mit konstanter Strahlungsintensität abgeben kann.

Eine Länge der Unterbrechungen 325 kann jeweils einer Breite der Fügeoberfläche 332, einer entlang der Fügeoberfläche 332 zu erstellenden Fügenaht oder einem Durchmesser eines bei dem Fügeverfahren eingesetzten Strahls entsprechen. Beispielsweise kann eine Länge der Unterbrechungen 325 jeweils in etwa einer Breite der Führungsrippe 324 entsprechen.

Die zwei Führungsabschnitte 326 sind in zwei gegenüberliegenden Randbereichen des plattenförmigen Hauptkörpers des Gehäuseteils 220 angeordnet. Insbesondere erstrecken sich die zwei Führungsabschnitte 326 entlang gegenüberliegender Langseitenkanten des plattenförmigen Hauptkörpers bzw. der Oberflächenseite 322 des Gehäuseteils 220. Bei den Führungsabschnitten 326 handelt es sich um Führungsschienen für ein bewegliches Sensorelement, beispielsweise einen Magnetschlitten des Sensors. Die Führungsabschnitte 326 sind zumindest teilweise durch Hinterschnitte gebildet. Die Führungsabschnitte 326 weisen an einem Ende einen Anschlagbereich zur Begrenzung einer Bewegung des beweglichen Sensorelementes auf.

Das Gehäuseteil 220 weist an der Fügeoberfläche, welche von der Oberflächenseite 322 an dem plattenförmigen Hauptkörper abgewandt ist, zumindest einen Vorsprung auf, der außerhalb des Fügebereichs angeordnet ist. Diese zumindest einen Vorsprung kann ausgebildet sein, um eine verbesserte Ausrichtung bei der Zusammenfügung des Gehäuseteils 220 mit dem weiteren Gehäuseteil 230 zu bewirken.

Das weitere Gehäuseteil 230 ist in Fig. 3 unterhalb des Gehäuseteils 220 angeordnet. Die Fügeoberfläche 332 stellt gemäß dem in Fig. 3 gezeigten Ausführungsbeispiel der vorliegenden Erfindung eine umlaufende Randkante der Aufnahmebucht 334 dar. Die Fügeoberfläche 332 des weiteren Gehäuseteils 230 weist gemäß dem in Fig. 3 gezeigten Ausführungsbeispiel der vorliegenden Erfindung einen quadratischen Verlauf mit abgerundeten Ecken auf. Die Aufnahmebucht 334 stellt eine Ausbuchtung bzw. einen Hohlraum in dem weiteren Gehäuseteil 230 dar. Die Aufnahmebucht 334 ist an allen bis auf einer Seite von dem weiteren Gehäuseteil 230 umschlossen.

Fig. 4 zeigt ein Gehäuse 300 eines Sensors für ein Fahrzeuggetriebe, gemäß einem Ausführungsbeispiel der vorliegenden Erfindung, in einem zusammengefügten Zustand. Das Gehäuse 300 entspricht hierbei dem Gehäuse aus Fig. 3, wobei das Gehäuseteil 220 und das weitere Gehäuseteil 230 in Fig. 4 zusammengefügt bzw. aneinander anliegend angeordnet sind. Somit entspricht die Darstellung in Fig. 4 der Darstellung aus Fig. 3 mit der Ausnahme, dass aufgrund des zusammengefügten Zustands des Gehäuseteils 220 und des weiteren Gehäuseteils 230 die Fügeoberfläche sowie die Aufnahmebucht des weiteren Gehäuseteils 230 durch das Gehäuseteil 220 in der Darstellung verdeckt sind. Das Gehäuseteil 220 und das weitere Gehäuseteil 230 können beispielsweise mittels eines Fügeverfahrens, wie beispielsweise Laserschweißen, miteinander stoffschlüssig verbunden sein. Dabei kann das Gehäuseteil 220 die Aufnahmebucht des weiteren Gehäuseteils 230 wie ein Deckel abdecken, wobei ein Aufnahmeraum für ein stationäres Sensorelement und zusätzlich oder alternativ eine Auswerteelektronik des Sensors gebildet wird.

Fig. 6 zeigt ein Ablaufdiagramm eines Verfahrens 500 zum Herstellen eines Sensors für ein Fahrzeuggetriebe, gemäß einem Ausführungsbeispiel der vorliegenden Erfindung. Das Verfahren 500 weist einen Schritt des Bereitstellens 510 eines Gehäuseteils für ein Gehäuse des Sensors auf. Dabei ist das Gehäuseteil mit einem weiteren Gehäuseteil entlang eines Fügebereichs mittels eines Fügeverfahrens zu dem Gehäuse verbindbar. Ferner weist das Gehäuseteil in dem Fügebereich im Rahmen üblicher Herstellungstoleranzen des Gehäuseteils, beispielsweise eines Spritzgussteils, eine konstante Wandstärke auf. Das Verfahren 500 weist auch einen Schritt des Bereitstellens 520 eines weiteren Gehäuseteils auf. Bei dem Gehäuseteil und dem weiteren Gehäuseteil kann es sich um das Gehäuseteil und das weitere Gehäuseteil aus einer der Figuren 2 bis 4 handeln. Das Verfahren 500 weist einen Schritt des Anbringens 530 eines stationären Sensorelementes und/oder einer Auswerteelektronik an dem Gehäuseteil oder dem weiteren Gehäuseteil auf. Der Schritt des Anbringens 530 kann ein Einsetzen oder Befestigen des stationären Sensorelements bzw. der Auswerteelektronik an oder in einem der Gehäuseteile umfassen. Das Verfahren 500 weist ferner einen Schritt des Anordnens 540 des Gehäuseteils und des weiteren Gehäuseteils aneinander auf. Dabei liegt das weitere Gehäuseteil an dem Fügebereich des Gehäuseteils an, und das Gehäuseteil und das weitere Gehäuseteil umschließen einen Aufnahmeraum für das stationäre Sensorelement und/oder die Auswerteelektronik. Das Verfahren 500 weist zudem einen Schritt des Zusammenfügens 550 des Gehäuseteils und des weiteren Gehäuseteils an dem Fügebereich mittels eines Fügeverfahrens auf. Das Verfahren 500 weist schließlich einen Schritt des Anbringens 560 eines beweglichen Sensorelementes an dem Gehäuseteil auf. Unter Anwendung des Verfahrens gemäß dem in Fig. 6 gezeigten Ausführungsbeispiel der vorliegenden Erfindung kann ein Sensor, wie der Sensor aus Fig. 2, vorteilhaft hergestellt werden.

Im Folgenden wird unter Bezugnahme auf die Figuren 2 bis 6 ein Ausführungsbeispiel der vorliegenden Erfindung zusammenfassend erläutert. Das Gehäuse 300 des Sensors 210 bzw. Positionssensors besteht aus mindestens zwei Gehäuseteilen 220, 230, welche dicht miteinander verbunden werden. Dabei kann die Herstellung des Sensors 210 bzw. des Gehäuses 300 auf möglichst einfache und kostengünstige Weise erzielt werden. Die beiden Gehäuseteile 220, 230 werden mittels Laserschweißen miteinander verbunden. Dabei werden die beiden Gehäuseteile 220, 230 aufeinander gesetzt und von dem Gehäuseteil 220 her wird ein Laserstrahl aufgebracht. Damit dies funktionieren kann, wird das Gehäuseteil 220 als transmittierend für die verwendeten Laserstrahlen und das weitere Gehäuseteil 230 als absorbierend für die verwendeten Laserstrahlen ausgebildet. Beim Verbinden der zwei Gehäuseteile 220, 230 mittels Laserschweißen ist es wichtig, dass der Laserstrahl so eingestellt ist, dass die Fügeoberfläche 332 des laserstrahlabsorbierenden Gehäuseteils 230 aufschmilzt. Dabei ist eine Voraussetzung, dass der Laserstrahl möglichst entlang der Fügeoberfläche 332 mit gleicher Stärke auftrifft, um ein möglichst gleichbleibendes und konstantes Aufschmelzen der Oberfläche zu erreichen.

Wie aus den Figuren 3 und 4 ersichtlich, besteht das Gehäuse 300 des Sensors 210 aus dem Gehäuseteil 220 bzw. einem Bauteil 1 mit einer Führungsrippe 324 für das toleranzarme Führen des beweglichen Sensorelements 240 bzw. Magnetschlittens und aus dem weiteren Gehäuseteil 230 bzw. einem Bauteil 2. Das weitere Gehäuseteil 230 muss an einer Seite, welche der Oberflächenseite 322 mit der Führungsrippe 324 gegenüberliegt, des Fügebereichs des Gehäuseteils 220 angebracht werden. Der Laserstrahl wird über die Oberflächenseite 322 des Gehäuseteils 220 mit der Führungsrippe 324 zugeführt. Beim Abfahren der Konturen der Fügeoberfläche 332 des weiteren Gehäuseteils 230 über die Oberflächenseite 322 des Gehäuseteils 220 würde eine durchgehend ausgebildete Führungsrippe die für das Schweißen benötigte Wandstärke des Gehäuseteils 220 negativ beeinflussen. Durch die an der Stelle einer solchen Führungsrippe erhöhte Dicke des Gehäuseteils 220 würde die Intensität des Laserstrahls eventuell so abgeschwächt werden, dass der Laserstrahl nicht mehr die Energie aufbringen kann, um an dieser Stelle die Fügeoberfläche 332 des weiteren Gehäuseteils 230 aufzuschmelzen. Weiterhin würde das Schweißergebnis durch Reflektionen beispielsweise an senkrechten Seitenwänden einer solchen Führungsrippe negativ beeinflusst werden, was zu dem gleichen Ergebnis führen kann, dass die Fügeoberfläche 332 des weiteren Gehäuseteils 230 nicht ordnungsgemäß oder nicht mehr aufgeschmolzen wird.

Da aus Gründen eines Toleranzausgleichs und einer sicheren Führung des beweglichen Sensorelements 240 bzw. des Magnetschlittens eine Führungsrippe unumgänglich ist, kann durch die Führungsrippe 324 mit den beispielhaft zwei Unterbrechungen 325 eine Möglichkeit geschaffen werden, die beiden Gehäuseteile 220 und 230 so miteinander zu verbinden, dass die Führungsrippe 324 vorhanden bleiben kann. Gelöst wird dies dadurch, dass die Führungsrippe 324 so unterbrochen wird, dass mit dem Laser eine Kontur der Fügeoberfläche 332 des weiteren Gehäuseteils 230 über die Oberflächenseite 322 des Gehäuseteils 220 so abgefahren werden kann, dass die Dicke des Gehäuseteils 220 in dem Fügebereich konstant bleibt und damit sichergestellt werden kann, dass die beiden Gehäuseteile 220, 230 sicher und dicht miteinander verbunden werden. Mit dem Laser kann dann die Kontur der Fügeoberfläche 332 des weiteren Gehäuseteils 230 auf der Oberflächenseite 322 des Gehäuseteils 220 abgefahren werden, ohne dass die Führungsrippe 324 ein Hindernis bzw. eine Störkontur für den Laserstahl darstellt oder der Laserstrahl abgeschwächt wird. Somit kann ein Aufschmelzen der Fügeoberfläche 332 des weiteren Gehäuseteils 230 unterhalb der Führungsrippe 324 sicher und zuverlässig erfolgen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

### Bezugszeichen

- 100: Gehäuse
- 120: Gehäuseteil
- 122: Oberflächenseite
- 124: Führungsrippe
- 126: Führungsabschnitt
- 130: weiteres Gehäuseteil
- 132: Fügeoberfläche
- 134: Aufnahmebucht
- 200: Fahrzeug
- 210: Sensor
- 220: Gehäuseteil
- 230: weiteres Gehäuseteil
- 240: bewegliches Sensorelement
- 250: stationäres Sensorelement
- 260: Auswerteelektronik
- 300: Gehäuse
- 220: Gehäuseteil
- 322: Oberflächenseite
- 324: Führungsrippe
- 325: Unterbrechung
- 326: Führungsabschnitt
- 230: weiteres Gehäuseteil
- 332: Fügeoberfläche
- 334: Aufnahmebucht
- 500: Verfahren
- 510: erster Schritt des Bereitstellens
- 520: zweiter Schritt des Bereitstellens
- 530: erster Schritt des Anbringens
- 540: Schritt des Anordnens
- 550: Schritt des Zusammenfügens
- 560: zweiter Schritt des Anbringens

## Patentansprüche

1. Gehäuseteil (220) für ein Gehäuse (300) eines Sensors (210) für ein Fahrzeuggetriebe, wobei das Gehäuseteil (220) mit einem weiteren Gehäuseteil (230) entlang eines Fügebereichs mittels eines Durchstrahlschweißverfahrens zu dem Gehäuse (300) verbindbar ist, wobei das Gehäuseteil (220) wenigstens entlang eines den Fügebereich umfassenden Abschnitts derart konfiguriert ist, dass eine bei dem Durchstrahlschweißverfahren eingesetzte und auf den Abschnitt abgegebene konstante Strahlung entlang des den Fügebereich umfassenden Abschnitts mit gleichbleibender Strahlungsintensität durchlassbar ist, **dadurch gekennzeichnet, dass** an einer planaren Oberfläche (322) des Gehäuseteils (220) zumindest ein Führungsabschnitt (326) und eine Führungsrippe (324) zum Führen eines beweglichen Sensorelementes (240) angeordnet sind, der zumindest eine Führungsabschnitt (326) und die Führungsrippe (324) eine gemeinsame Haupterstreckungsrichtung aufweisen und sich die Führungsrippe (324) über den den Fügebereich umfassenden Abschnitt hinweg erstreckt und in dem Abschnitt unterbrochen ist.

2. Gehäuseteil (220) gemäß Anspruch 1, **dadurch gekennzeichnet, dass** das Gehäuseteil (220) wenigstens in dem den Fügebereich umfassenden Abschnitt eine konstante Wandstärke aufweist.

3. Gehäuseteil (220) gemäß Anspruch 1, **dadurch gekennzeichnet, dass** der Fügebereich wenigstens zwei Bereiche mit zueinander unterschiedlicher Wandstärke aufweist, wobei optische Eigenschaften dieser Bereiche zur Abgabe der bei dem Fügeverfahren eingesetzten konstanten Strahlung entlang des den Fügebereich umfassenden Abschnitts mit gleichbleibender Strahlungsintensität aufeinander abgestimmt sind.

4. Gehäuseteil gemäß einem der vorangegangenen Ansprüche, **dadurch gekennzeichnet, dass** die Führungsrippe (324) in dem Abschnitt des Fügebereichs eine Ausnehmung aufweist, wobei der Abschnitt bis auf ein Niveau der planaren Oberfläche abgesenkt ist.

5. Gehäuse (300) für einen Sensor (210) für ein Fahrzeuggetriebe, **dadurch gekennzeichnet, dass** das Gehäuse (300) ein Gehäuseteil (220) gemäß einem der Ansprüche 1 bis 4 und ein weiteres Gehäuseteil (230) aufweist, das weitere Gehäuseteil (230) an dem Fügebereich des Gehäuseteils (220) an dem Gehäuseteil (220) anliegend angeordnet ist, und das Gehäuseteil (220) und das weitere Gehäuseteil (230) einen Aufnahmeraum für ein stationäres Sensorelement (250) umschließen.

6. Gehäuse (300) gemäß Anspruch 5, **dadurch gekennzeichnet, dass** das Gehäuseteil (220) entlang dem Fügebereich mit dem weiteren Gehäuseteil (230) mittels eines Durchstrahlschweißverfahrens verbunden ist und das weitere Gehäuseteil (230) absorbierend für die bei dem Durchstrahlschweißverfahren eingesetzte Strahlung ausgebildet ist.

7. Sensor (210) für ein Fahrzeuggetriebe, wobei der Sensor (210) ein stationäres Sensorelement (250) und ein bewegliches Sensorelement (240) aufweist, **dadurch gekennzeichnet, dass** der Sensor (210) ein Gehäuse (300) gemäß einem der Ansprüche 5 oder 6 aufweist, das stationäre Sensorelement (250) in dem von dem Gehäuseteil (220) und dem weiteren Gehäuseteil (230) umschlossenen Aufnahmeraum angeordnet ist, und das bewegliche Sensorelement (240) an dem Gehäuseteil (220) beweglich angebracht ist.

8. Sensor (210) gemäß Anspruch 7, wobei der Sensor (210) eine Auswerteelektronik (260) aufweist, **dadurch gekennzeichnet, dass** die Auswerteelektronik (260) in dem von dem Gehäuseteil (220) und dem weiteren Gehäuseteil (230) umschlossenen Aufnahmeraum angeordnet ist und das weitere Gehäuseteil (230) eine elektrische Kontakteinrichtung zur Ankontaktierung des stationären Sensorelements (250) und/oder der Auswerteelektronik (260) von außerhalb des weiteren Gehäuseteils (230) aufweist.

9. Verfahren (500) zum Herstellen eines Sensors (210) für ein Fahrzeuggetriebe, **dadurch gekennzeichnet, dass** das Verfahren (500) einen Schritt des Bereitstellens (510) eines Gehäuseteils (220) für ein Gehäuse (300) des Sensors (210), wobei das Gehäuseteil (220) mit einem weiteren Gehäuseteil (230) entlang eines Fügebereichs mittels eines Durchstrahlschweißverfahrens zu dem Gehäuse (300) verbindbar ist und das Gehäuseteil (220) wenigstens entlang eines den Fügebereich umfassenden Abschnitts derart ausgebildet ist, dass eine bei dem Durchstrahlschweißverfahren eingesetzte und auf den Abschnitt abgegebene konstante Strahlung entlang des den Fügebereich umfassenden Abschnitts mit gleichbleibender Strahlungsintensität durchlassbar ist, und wobei an einer planaren Oberfläche (322) des Gehäuseteils (220) zumindest ein Führungsabschnitt (326) und eine Führungsrippe (324) zum Führen eines beweglichen Sensorelementes (240) angeordnet sind, der zumindest eine Führungsabschnitt (326) und die Führungsrippe (324) eine gemeinsame Haupterstreckungsrichtung aufweisen und sich die Führungsrippe (324) über den den Fügebereich umfassenden Abschnitt hinweg erstreckt und in dem Abschnitt unterbrochen ist, einen Schritt des Bereitstellens (520) eines weiteren Gehäuseteils (230) mit einer die bei dem Durchstrahlschweißverfahren eingesetzten Strahlung absorbierenden Fügeoberfläche (332), einen Schritt des Anbringens (530) eines stationären Sensorelementes (250) und/oder einer Auswerteelektronik (260) an dem Gehäuseteil (220) oder dem weiteren Gehäuseteil (230), einen Schritt des Anordnens (540) des Gehäuseteils (220) und des weiteren Gehäuseteils (230) aneinander, wobei das weitere Gehäuseteil (230) mit der Fügeoberfläche (332) an dem Fügebereich des Gehäuseteils (220) anliegt, wobei das Gehäuseteil (220) und das weitere Gehäuseteil (230) einen Aufnahmeraum für das stationäre Sensorelement (250) umschließen, einen Schritt des Zusammenfügens (550) des Gehäuseteils (220) und des weiteren Gehäuseteils (230) an dem Fügebereich mittels des Durchstrahlschweißverfahrens und einen Schritt des Anbringens (560) des beweglichen Sensorelementes (240) an dem Gehäuseteil (220)aufweist.

10. Verfahren (500) gemäß Anspruch 9, **dadurch gekennzeichnet, dass** der Schritt des Zusammenfügens (550) mittels Laserschweißen ausgeführt wird, wobei ein bei dem Laserschweißen eingesetzter Laserstrahl von dem Gehäuseteil (220) transmittiert und von dem weiteren Gehäuseteil (230) absorbiert wird.

## Claims

1. Housing part (220) for a housing (300) of a sensor (210) for a vehicle transmission, wherein the housing part (220) can be connected to a further housing part (230) along a joining region by means of a transmission welding process to form the housing (300), wherein the housing part (220) is configured at least along a portion comprising the joining region in such a way that a constant radiation used in the transmission welding process and emitted onto the portion can be allowed to pass through with the radiation intensity remaining the same along the portion comprising the joining region, **characterized in that** at least one guiding portion (326) and a guiding rib (324) are arranged on a planar surface (322) of the housing part (220) for guiding a movable sensor element (240), the at least one guiding portion (326) and the guiding rib (324) have a common main direction of extent and the guiding rib (324) is made to extend over the portion comprising the joining region and is interrupted in the portion.

2. Housing part (220) according to Claim 1, **characterized in that**, at least in the portion comprising the joining region, the housing part (220) has a constant wall thickness.

3. Housing part (220) according to Claim 1, **characterized in that** the joining region has at least two regions with wall thicknesses different from one another, wherein optical properties of these regions are adapted to one another so as to emit the constant radiation used in the joining process along the portion comprising the joining region with the radiation intensity remaining the same.

4. Housing part according to one of the preceding claims, **characterized in that** the guiding rib (324) has a recess in the portion of the joining region, wherein the recess is taken down to a level of the planar surface.

5. Housing (300) for a sensor (210) for a vehicle transmission, **characterized in that** the housing (300) has a housing part (220) according to one of Claims 1 to 4 and a further housing part (230), the further housing part (230) is arranged lying against the housing part (220) at the joining region of the housing part (220), and the housing part (220) and the further housing part (230) enclose a receiving space for a stationary sensor element (250).

6. Housing (300) according to Claim 5, **characterized in that** the housing part (220) is connected to the further housing part (230) along the joining region by means of a transmission welding process and the further housing part (230) is formed such that it is absorbent to the radiation used in the transmission welding process.

7. Sensor (210) for a vehicle transmission, wherein the sensor (210) has a stationary sensor element (250) and a movable sensor element (240), **characterized in that** the sensor (210) has a housing (300) according to either of Claims 5 and 6, the stationary sensor element (250) is arranged in the receiving space enclosed by the housing part (220) and the further housing part (230), and the movable sensor element (240) is movably attached to the housing part (220).

8. Sensor (210) according to Claim 7, wherein the sensor (210) has an electronic evaluation unit (260), **characterized in that** the electronic evaluation unit (260) is arranged in the receiving space enclosed by the housing part (220) and the further housing part (230) and the further housing part (230) has an electrical contact device for contacting the stationary sensor element (250) and/or the electronic evaluation unit (260) from outside the further housing part (230).

9. Method (500) for producing a sensor (210) for a vehicle transmission, **characterized in that** the method (500) comprises a step of providing (510) a housing part (220) for a housing (300) of the sensor (210), wherein the housing part (220) can be connected to a further housing part (230) along a joining region by means of a transmission welding process to form the housing (300) and the housing part (220) is formed at least along a portion comprising the joining region in such a way that a constant radiation used in the transmission welding process and emitted onto the portion can be allowed to pass through with the radiation intensity remaining the same along the portion comprising the joining region, and wherein at least one guiding portion (326) and a guiding rib (324) are arranged on a planar surface (322) of the housing part (220) for guiding a movable sensor element (240), the at least one guiding portion (326) and the guiding rib (324) have a common main direction of extent and the guiding rib (324) is made to extend over the portion comprising the joining region and is interrupted in the portion, a step of providing (520) a further housing part (230), with a joining surface (332) that is absorbent to the radiation used in the transmission welding process, a step of attaching (530) a stationary sensor element (250) and/or an electronic evaluation unit (260) to the housing part (220) or the further housing part (230), a step of arranging (540) the housing part (220) and the further housing part (230) against one another, wherein the further housing part (230) lies with the joining surface (332) against the joining region of the housing part (220), wherein the housing part (220) and the further housing part (230) enclose a receiving space for the stationary sensor element (250), a step of joining together (550) the housing part (220) and the further housing part (230) at the joining region by means of the transmission welding process and a step of attaching (560) the movable sensor element (240) to the housing part (220).

10. Method (500) according to Claim 9, **characterized in that** the joining together step (550) is performed by means of laser welding, wherein a laser beam used in the laser welding is transmitted by the housing part (220) and absorbed by the further housing part (230).

## Revendications

1. Partie de boîtier (220) pour un boîtier (300) d'un détecteur (210) pour une boîte de vitesses de véhicule, la partie de boîtier (220) pouvant être connectée à une partie de boîtier supplémentaire (230) le long d'une zone d'assemblage au moyen d'un procédé de soudage par transmission pour former le boîtier (300), la partie de boîtier (220), au moins le long d'une portion comprenant la région d'assemblage, étant configurée de telle sorte qu'un rayonnement continu utilisé dans le procédé de soudage par transmission et envoyé sur la portion puisse passer le long de la portion comprenant la zone d'assemblage avec une intensité de rayonnement uniforme, **caractérisée en ce qu'**au moins une portion de guidage (326) et une nervure de guidage (324) pour guider un élément de détecteur mobile (240) sont disposées au niveau d'une surface plane (322) de la partie de boîtier (220), l'au moins une portion de guidage (326) et la nervure de guidage (324) présentant une direction d'étendue principale commune et la nervure de guidage (324) s'étendant au-delà de la portion comprenant la région d'assemblage et étant interrompue dans la portion.

2. Partie de boîtier (220) selon la revendication 1, **caractérisée en ce que** la partie de boîtier (220) présente une épaisseur de paroi constante au moins dans la portion comprenant la région d'assemblage.

3. Partie de boîtier (220) selon la revendication 1, **caractérisée en ce que** la région d'assemblage présente au moins deux régions avec une épaisseur de paroi différente l'une de l'autre, des propriétés optiques de ces régions étant ajustées l'une à l'autre le long de la portion comprenant la région d'assemblage avec une intensité de rayonnement uniforme pour émettre le rayonnement constant utilisé dans le procédé d'assemblage.

4. Partie de boîtier selon l'une quelconque des revendications précédentes, **caractérisée en ce que** la nervure de guidage (324) présente un évidement dans la portion de la région d'assemblage, la portion étant abaissée jusqu'à un niveau de la surface plane.

5. Boîtier (300) pour un détecteur (210) pour une boîte de vitesses de véhicule, **caractérisé en ce que** le boîtier (300) présente une partie de boîtier (220) selon l'une quelconque des revendications 1 à 4 et une partie de boîtier supplémentaire (230), la partie de boîtier supplémentaire (230) étant disposée de manière à s'appliquer contre la partie de boîtier (220) au niveau de la région d'assemblage de la partie de boîtier (220) et la partie de boîtier (220) et la partie de boîtier supplémentaire (230) renfermant un espace de réception pour un élément de détecteur stationnaire (250).

6. Boîtier (300) selon la revendication 5, **caractérisé en ce que** la partie de boîtier (220) est connectée le long de la région d'assemblage à la partie de boîtier supplémentaire (230) au moyen d'un procédé de soudage par transmission et la partie de boîtier supplémentaire (230) est réalisée de manière à absorber le rayonnement utilisé dans le procédé de soudage par transmission.

7. Détecteur (210) pour une boîte de vitesses de véhicule, le détecteur (210) présentant un élément de détecteur stationnaire (250) et un élément de détecteur mobile (240), **caractérisé en ce que** le détecteur (210) présente un boîtier (300) selon l'une quelconque des revendications 5 ou 6, l'élément de détecteur stationnaire (250) étant disposé dans l'espace de réception renfermé par la partie de boîtier (220) et la partie de boîtier supplémentaire (230), et l'élément de détecteur mobile (240) étant monté de manière déplaçable sur la partie de boîtier (220).

8. Détecteur (210) selon la revendication 7, dans lequel le détecteur (210) présente une électronique d'analyse (260), **caractérisé en ce que** l'électronique d'analyse (260) est disposée dans l'espace de réception renfermé par la partie de boîtier (220) et la partie de boîtier supplémentaire (230) et la partie de boîtier supplémentaire (230) présente un dispositif de contact électrique pour la mise en contact de l'élément de détecteur stationnaire (250) et/ou de l'électronique d'analyse (260) depuis l'extérieur de la partie de boîtier supplémentaire (230).

9. Procédé (500) pour fabriquer un détecteur (210) pour une boîte de vitesses de véhicule, **caractérisé en ce que** le procédé (500) présente une étape de fourniture (510) d'une partie de boîtier (220) pour un boîtier (300) du détecteur (210), la partie de boîtier (220) pouvant être connectée à une partie de boîtier supplémentaire (230) le long d'une zone d'assemblage au moyen d'un procédé de soudage par transmission pour former le boîtier (300) et la partie de boîtier (220), au moins le long d'une portion comprenant la région d'assemblage, étant configurée de telle sorte qu'un rayonnement continu utilisé dans le procédé de soudage par transmission et envoyé sur la portion puisse passer le long de la portion comprenant la zone d'assemblage avec une intensité de rayonnement uniforme, et au moins une portion de guidage (326) et une nervure de guidage (324) pour le guidage d'un élément de détecteur mobile (240) étant disposées au niveau d'une surface plane (322) de la partie de boîtier (220), l'au moins une portion de guidage (326) et la nervure de guidage (324) présentant une direction d'étendue principale commune et la nervure de guidage (324) s'étendant au-delà de la portion comprenant la région d'assemblage et étant interrompue dans la portion, une étape de fourniture (520) d'une partie de boîtier supplémentaire (230) avec une surface d'assemblage (332) absorbant le rayonnement utilisé lors du procédé de soudage par transmission, une étape de montage (530) d'un élément de détecteur stationnaire (250) et/ou d'une électronique d'analyse (260) sur la partie de boîtier (220) ou sur la partie de boîtier supplémentaire (230), une étape de disposition (540) de la partie de boîtier (220) et de la partie de boîtier supplémentaire (230) l'une contre l'autre, la partie de boîtier supplémentaire (230) s'appliquant avec la surface d'assemblage (332) contre la région d'assemblage de la partie de boîtier (220), la partie de boîtier (220) et la partie de boîtier supplémentaire (230) renfermant un espace de réception pour l'élément de détecteur stationnaire (250), une étape d'assemblage (550) de la partie de boîtier (220) et de la partie de boîtier supplémentaire (230) au niveau de la région d'assemblage au moyen du procédé de soudage par transmission et une étape de montage (560) de l'élément de détecteur mobile (240) sur la partie de boîtier (220).

10. Procédé (500) selon la revendication 9, **caractérisé en ce que** l'étape d'assemblage (550) est réalisée par soudage au laser, un faisceau laser utilisé lors du soudage au laser étant transmis par la partie de boîtier (220) et étant absorbé par la partie de boîtier supplémentaire (230).
